# EUROPEAN PATENT SPECIFICATION

(11) **EP 3 998 783 B1**
(45) Date of publication and mention of the grant of the patent: **28.10.2026**
(21) Application number: 20837432.2
(22) Date of filing: 07.07.2020
(51) Int. Cl.: H04W 4/02, H04W 24/04, H04W 28/00

(54) **METHOD AND APPARATUS FOR RADIO RESOURCE MANAGEMENT**
VERFAHREN UND VORRICHTUNG ZUR FUNK-RESSOURCEN-VERWALTUNG
PROCÉDÉ ET APPAREIL DE GESTION DE RESSOURCES RADIO

(30) Priority: 11.07.2019 CN 201910626455
(43) Date of publication of application: 18.05.2022
(73) Proprietor: ZTE Corporation, Shenzhen, Guangdong 518057 (CN)
(72) Inventor: YE, Fei, Shenzhen, Guangdong 518057 (CN); LIANG, Wanglewen, Shenzhen, Guangdong 518057 (CN)
(74) Representative: Canzler & Bergmeier Patentanwälte Partnerschaft mbB
(86) International application number: PCT/CN2020/100661
(87) International publication number: WO 2021/004455

(56) References cited:
- WO-A1-2019/095186
- CN-A- 103 179 658
- CN-A- 106 304 172
- CN-A- 108 199 989
- CN-A- 108 243 451
- CN-A- 108 391 292
- CN-A- 110 248 366
- US-A1- 2007 213 061
- US-A1- 2014 323 153
- US-A1- 2018 152 876
- US-A1- 2020 275 354

## Description

### TECHNICALFIELD

Embodiments of the present disclosure relate to, but are not limited to, the field of wireless communication technology.

### BACKGROUND

With the rapid development of wireless communication networks, the user scale and the traffic volume are also rapidly increased, and the complicated and diverse service types and the large user population pose new challenges for differentiated configuration and management of wireless cells. For different types of cell user features, different radio resource management parameters are adopted and dynamically updated along with changes in a user model. Low cost, intellectualization and unmanned operation have become some of the primary issues concerned in daily operations management for the major operators.

In practice, when most users in a cell have low mobility features, the matched low mobility attribute parameters should be configured to sufficiently provide system capacity per unit area, thereby providing better experience for the users; and when most users in a cell have high mobility features, the matched high mobility attribute parameters are desired to reduce performance loss caused by the mobility.

As can be seen, both of identification of high-speed cell or low-speed cell and delicacy parameter configuration of radio resources bring great troubles and workload to operators, and notably increase the cost. Therefore, the major operators are urgent to solve these problems. Another example can be found in patent documents US 2018/152876 and US 2014/323153.

### SUMMARY

The present disclosure provides a method for radio resource management, including: generating a cell feature interval of a cell based on a radio frequency fingerprint, and constructing a terminal model in the cell feature interval; and determining, according to hopping status of the terminal model in the cell feature interval of the cell, a mobility feature corresponding to the cell.

In another aspect, the present disclosure provides an apparatus for radio resource management, including: a model construction module configured to generate a cell feature interval of a cell based on a radio frequency fingerprint, and construct a terminal model in the cell feature interval; and a management module configured to determine, according to hopping status of the terminal model in the cell feature interval of the cell, a mobility feature corresponding to the cell.

In another aspect, the present disclosure provides a computer-readable storage medium having a computer program stored thereon which, when executed by a processor, causes the above method for radio resource management to be implemented.

### BRIEF DESCRIPTION OF DRAWINGS

Accompanying drawings are provided for further understanding of the technical solution of the present disclosure and constitute a part of the specification. Hereinafter, these drawings are intended to explain the technical solution of the present disclosure together with the following embodiments, but should not be considered as a limitation to the technical solution of the present disclosure. In the drawings,
FIG. 1 is a schematic diagram of an implementation environment according to the present disclosure;
FIG. 2 is a flowchart of a method for radio resource management according to a claimed embodiment;
FIG. 3 is an exemplary flowchart of constructing a cell feature interval according to the present disclosure;
FIG. 4 is an exemplary flowchart of identifying a mobility feature corresponding to a cell and delivering parameters according to the present disclosure;
FIG. 5 is an exemplary flowchart of updating a parameter set according to the present disclosure; and
FIG. 6 is a schematic diagram of an apparatus for radio resource management according to the present disclosure.

### DETAIL DESCRIPTION OF EMBODIMENTS

For clarity and better understanding of the objects, technical solution and advantages of the present disclosure, embodiments of the present disclosure will now be described in detail in conjunction with the accompanying drawings. It should be noted that the embodiments of the present disclosure and features herein may be combined with each other in any manner as long as they are not contradictory.

The operations illustrated in the flowchart of the drawings may be executed in a computer system such as a set of computer-executable instructions. Also, although a logical order is shown in the flowchart, in some cases, the operations shown or described may be performed in a different order than that illustrated herein.

In the conventional manner, one of the most common methods for identifying a speed of a user equipment (UE) includes: determining a moving speed of a terminal through a resident duration of the terminal in a history cell according to history information of the terminal; and determining the moving speed of the terminal through the Doppler effect in a high-speed rail scenario. However, no matter what method is adopted, either the error is large or the application scenario is limited, making the method unable to be widely applied in practice and fail to have generality or universality.

For the parameter configuration in delicacy management, long-term accumulations of a great number of experts are desired to form an expert experience base, which involves a large deal of manpower and time, as well as extremely high cost.

The present disclosure provide a method and an apparatus for radio resource management which, by identifying a mobility feature corresponding to a cell using a radio frequency fingerprint technology, can be applied to different application scenarios, and have universality and universality. Embodiments of

the present disclosure may be applied to intelligent control of radio resources to support intelligent and delicacy control of radio resources so that parameters of the radio resources can be dynamically adjusted along with changes of scenarios to make the parameter configuration more reasonable, and performance in an area can be greatly improved to improve the user experience.

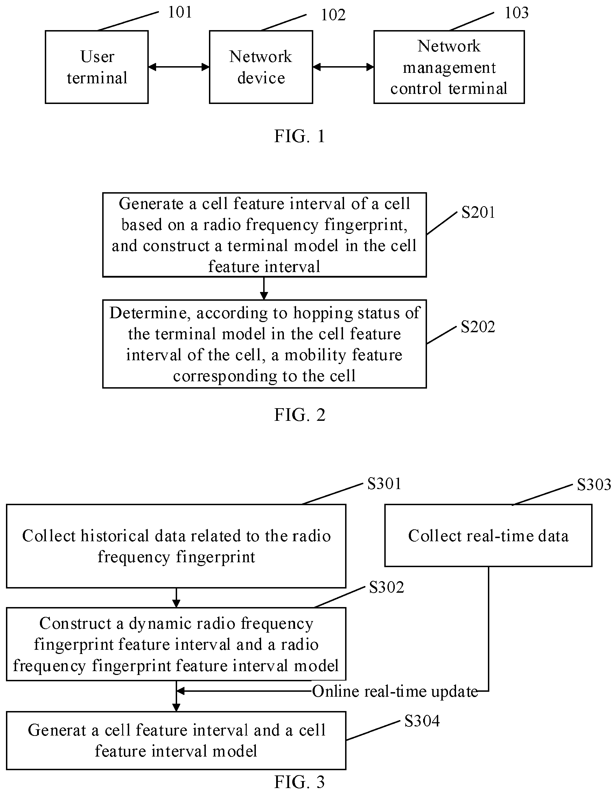

FIG. 1 is a schematic diagram of an implementation environment according to the present disclosure. As shown in FIG. 1, the communication system may include: a user terminal 101, a network device 102 and a network management control terminal 103. The network device 102 may communicate with the user terminal 101 and the network management control terminal 103, respectively. FIG. 1 is merely an example, and the number of the user terminals 101, or the network devices 102, or the network management control terminals 103, is not limited in the present disclosure.

It should be understood that the communication system shown in FIG. 1 is merely an example, and the present disclosure are not limited thereto. The technical solutions provided in the present disclosure may be applied to various communication systems, such as: Long Term Evolution (LTE) system, and Time Division Duplex (TDD) system, Universal Mobile Telecommunication System (UMTS), a 5G New Radio (NR) communication system, or the like.

The network device 102 may be an evolutional node B (eNB or eNodeB) in LTE, a base station device in a 5G network, or a base station in a future communication system, or the like.

The user terminal 101 may communicate with one or more Core Networks via a Radio Access Network (RAN), and may also be referred to as an access terminal, a user equipment (UE), a subscriber unit, a subscriber station, a mobile station, a mobile platform, a remote station, a remote terminal, a mobile device, a terminal device, a terminal, a wireless communication device, a user agent, or a user device. For example, the user terminal 101 may be a cellular phone, a cordless phone, a Session Initiation Protocol (SIP) phone, a Wireless Local Loop (WLL) station, a Personal Digital Assistant (PDA), a hand-held device with a wireless communication function, a computing device or another processing device connected to a wireless modem, an in-vehicle device, a wearable device, or a terminal device in a 5G network, or the like.

In wireless network communication, the user terminal 101 acquires wireless signal information by means of measurement and informs the network device 102 (such as a base station) of the acquired wireless signal information. Then, the network device 102 provides appropriate radio resources for the user terminal 101 to guarantee normal services of the user terminal 101 during movement among various base stations.

Different types of user terminals, different user habits, and different user distributions have different requirements on cell radio resources, resulting in great differences in the radio resource allocation. Especially in a high-speed or non-high-speed moving scenario of the user terminal, whether the radio resources are allocated properly plays a crucial role in the user experience. Allocation of the radio resources is configured by different parameters. Therefore, it is crucial in wireless network communication that the configuration of parameters conforms to features of the area, which directly decides the user experience.

The method for radio resource management provided in the present disclosure may be executed by the network management control terminal that may deliver, according to information reported by a network device, parameters for configuring radio resources to the network device, thereby implementing intelligent and delicacy parameter management of radio resources. The network management control terminal may be an independent server or a server cluster. However, the present disclosure is not limited thereto.

FIG. 2 is a flowchart of a method for radio resource management according to the present disclosure. As shown in FIG. 2, the method for radio resource management provided by the present disclosure includes the following operations S201 to S202.

At operation S201, generating a cell feature interval of a cell based on a radio frequency fingerprint, and constructing a terminal model in the cell feature interval.

At operation S202, determining, according to hopping status of the terminal model in the cell feature interval of the cell, a mobility feature corresponding to the cell.

In the present disclosure, the radio frequency fingerprint is configured to characterize a wireless signal strength feature of a coverage area of the network device (base station). The cell feature interval is configured to identify a wireless performance location area of the user terminal. The determination of the cell feature interval depends on the radio frequency fingerprint in the network area.

In the present disclosure, for any terminal in any cell feature interval, when the terminal appears in multiple cell feature intervals within a timing period, it indicates that the terminal is moving, which is referred to as "hopping" in the present disclosure. The process of a terminal moving from one cell feature interval to another may be referred to as a "hop". For a terminal, a hop index per unit time may be calculated according to the total number of the hops of the terminal in a timing period, (e.g., by dividing the total number of hops in the timing period by the timing period). The larger the hop index per unit time is, the faster the terminal is moving; and on the contrary, when the hop index per unit time is smaller or 0, it indicates that the terminal does not move or is moving at a lower speed.

In the present disclosure, the mobility feature corresponding to the cell is configured to characterize the mobility feature (high mobility or non-high mobility) of most terminals in the cell. When a terminal is moving at a speed higher than or equal to a speed threshold (e.g., 90 km/h), the terminal is considered to have a high mobility feature; and otherwise, the terminal is considered to have a non-high mobility feature. For example, when the number of terminals with high mobility features in a cell is greater than or equal to a threshold, the cell is considered to correspond to the high mobility feature, that is, the cell is a high-speed cell. When the number of terminals with high mobility features in a cell is less than the threshold, the cell is considered to correspond to the non-high mobility, that is, the cell is a non-high-speed cell. It should be noted that the speed threshold for distinguishing the high mobility feature and the non-high mobility feature of the terminal may be configurable, for example, to 80 km/h, which is an empirical value of existing networks.

In the present disclosure, the signal interval is divided into segments according to the radio frequency fingerprint to generate the cell feature interval of the cell, and a terminal model in the cell feature interval is constructed to further infer the mobility feature corresponding to the cell, so that the cell can be accurately identified as a high-speed cell or a non-high-speed cell, thereby supporting intelligent and delicacy control of radio resources.

Based on the method for radio resource management shown in FIG. 2, in a claimed embodiment, before the operation S201, the method for radio resource management of the present disclosure includes: constructing, based on historical data related to a radio frequency fingerprint in a network area, a radio frequency fingerprint feature interval in a machine learning mode, and the operation S201 includes superimposing real-time data in the network area as auxiliary information to the radio frequency fingerprint feature interval to generate the cell feature interval of the cell.

FIG. 3 is an exemplary flowchart of constructing a cell feature interval according to the present disclosure. As shown in FIG. 3, in this example, the construction process of the cell feature interval includes the following operations S301 to S304.

At operation S301, collecting historical data related to the radio frequency fingerprint, for example, including but not limited to a signal quality, a measurement report (including, for example, information on such as wireless signal strength, interference, reference signal power indication, signal-to-noise ratio, etc.), terminal information (including, for example, the number of users, location information, etc.), cell information, etc.

At operation S302, dividing the cell into multiple segments according to the signal strength, and constructing a dynamic radio frequency fingerprint feature interval using a clustering algorithm, and constructing a radio frequency fingerprint feature interval model according to the number of users, user distribution, and information on base station cells in a preset statistical period. The radio frequency fingerprint feature interval model may include: information on cells in the corresponding radio frequency fingerprint feature interval, information on neighbor cells, information on base stations, information on terminals or the like.

In this example, the radio frequency fingerprint feature interval and the radio frequency fingerprint feature interval model may be constructed in the machine learning mode. Signal segmentation may be carried out according to the radio frequency fingerprint, and combining with auxiliary information of a specific base station or terminal, a radio frequency fingerprint feature interval model specific to the base station or terminal may be constructed.

In this example, by obtaining historical measurement reports, terminal information, cell information, location information, or the like, an initial radio frequency fingerprint feature interval can be intelligently partitioned, and an initial radio frequency fingerprint feature interval model can be constructed, thereby constructing a wireless radio frequency fingerprint information base.

At operation S303, collecting real-time data, for example, including but not limited to a real-time measurement report, a geographic location or the like reported by the terminal, and using the collected real-time data as auxiliary information of the radio frequency fingerprint feature interval for online data superposition.

At operation S304, generating a cell feature interval and a cell feature interval model in an online real-time updating manner. By means of online real-time data superposition based on the initial radio frequency fingerprint feature interval, a cell feature interval, and thus a cell feature interval model, corresponding to the current scenario can be generated. The cell feature interval model may include: information on cells in the corresponding cell feature interval, information on neighbor cells, information on base stations, information on terminals or the like.

In this example, real-time data may be periodically collected, based on which the cell feature interval and the cell feature interval model are updated.

In this example, a wireless radio frequency fingerprint information base is constructed from historical data, and the cell feature interval and the cell feature interval model corresponding to the real-time scenario are generated according to the wireless radio frequency fingerprint information base and the collected real-time data, so that the data processing speed can be increased, and the construction efficiency of the cell feature interval and the cell feature interval model in the real-time scenario can be improved.

Based on the method for radio resource management shown in FIG. 2, in an exemplary implementation, in operation S201, constructing the terminal model in the cell feature interval may include: detecting whether the radio frequency fingerprint in the cell feature interval meets a stability condition within a first set time length; and constructing, when the stability condition is met, a terminal model in the cell feature interval. In an example, the radio frequency fingerprint in the cell feature interval has no or fewer changes within the first set time length, that is, the stability condition is met, so the terminal model in the cell feature interval may be constructed. The first set time length may be adjusted according to actual requirements, which is not limited herein.

Based on the method for radio resource management shown in FIG. 2, in an exemplary implementation, the operation S202 may include: determining the number of terminal models of which the hopping status meets a hopping condition within a second set time length; determining, when the number meets a first condition, that the cell corresponds to a high mobility (in other words, the cell is a high-speed cell); and determining, when the number does not meet the first condition, that the cell corresponds to a non-high mobility (in other words, the cell is a non-high-speed cell). The second set time length may be adjusted according to actual requirements, which is not limited herein.

In an example, one terminal model is constructed in one cell feature interval, and the number of terminal hops may be recorded in the terminal model and configured to characterize the total number of hops of all terminals in the cell feature interval. When the number of terminal hops in the second set time length is greater than a hop threshold, the terminal model is considered to meet the hopping condition. The operation further includes counting the number of terminal models meeting the hopping condition in the cell. When the counted number is greater than a threshold, the cell is determined as a high-speed cell, and otherwise (i.e., when the counted number is smaller than or equal to the threshold), the cell is determined as a non-high-speed cell. Settings of the hop threshold and the threshold for the counted number of terminal models meeting the hopping condition are not limited herein.

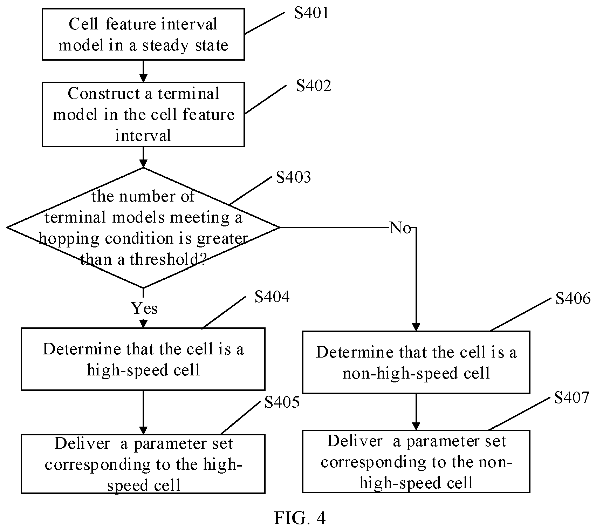

FIG. 4 is an exemplary flowchart of identifying a mobility feature corresponding to a cell and delivering parameters according to the present disclosure. In an example, as shown in FIG. 4, the process for identifying the mobility feature corresponding to a cell and the process of delivering parameters include the following operations S401 to S407.

At operation S401, determining that the cell feature interval model is in a steady state.

For any cell feature interval of the cell, it is detected whether the radio frequency fingerprint feature in the cell feature interval is still changing within a first set time length, and when the changing area become steady, it is determined that the cell feature interval model is in a steady state.

At operation S402, constructing a terminal model in the cell feature interval, and continuously monitoring the hopping status of the terminal model in the cell feature interval. One terminal model is constructed in one cell feature interval, and the terminal model is configured to record the status of all the terminals in the cell feature interval.

An example of the terminal model in the cell feature interval may be:
UEinGridModel=F(Time, UEnum/Grid, Hop/UE, UePath); where Time represents time, UEnum/Grid represents the number of terminals in a cell feature interval (grid), and Hop/UE represents the number of terminal hops in the cell feature interval (i.e., the total number of hops of all terminals in the cell feature interval); and UePath represents location information or a movement path of each terminal in the cell feature interval.

At operation S403, judging whether the number of terminal models meeting the hopping condition in the cell is greater than a threshold.

When the number of terminal hops in the second set time length is greater than a hop threshold, the terminal model is considered to meet the hopping condition. The operation further includes counting the number of terminal models meeting the hopping condition in the cell. When the number of terminal models meeting the hopping condition in the cell is greater than the threshold, proceed to operation S404; otherwise, proceed to operation S406.

At operation S404, determining, when the number of terminal models meeting the hopping condition in the cell is greater than the threshold, that the cell is a high-speed cell.

At operation S405, delivering to a base station corresponding to the cell a parameter set corresponding to the high-speed cell, and synchronously updating the mobility feature and monitoring index corresponding to the cell.

At operation S406, determining, when the number of terminal models meeting the hopping condition in the cell is smaller than or equal to the threshold, that the cell is a non-high-speed cell.

At operation S407, delivering to a base station corresponding to the cell a parameter set corresponding to the non-high-speed cell, and synchronously updating the mobility feature and monitoring index corresponding to the cell.

In this example, the high-speed cell and the non-high-speed cell can be accurately identified based on the radio frequency fingerprint technology, thereby supporting delicacy control of the radio resources, and enabling dynamic adjustment of radio parameter configuration along with changes of scenarios. Moreover, parameter self-configuration is realized, and the labor cost of operators is saved.

Based on the method for radio resource management shown in FIG. 2, in an exemplary implementation, the method for radio resource management of the embodiment may further include: generating parameter sets corresponding to different mobility features in a machine learning mode.

For example, generating parameter sets corresponding to different mobility features in the machine learning mode may include: generating a first parameter set corresponding to a high-speed cell and a second parameter set corresponding to a non-high-speed cell in the machine learning mode. The first parameter set and the second parameter set may each include: a cell-level parameter, or a cell-level parameter and a terminal-level parameter. In an example, by delivering the cell-level parameter and the terminal-level parameter, not only cell-level control but also terminal-level control can be implemented. The terminal-level parameter may be delivered from a base station to a corresponding terminal.

In this exemplary implementation, after determining the mobility feature corresponding to the cell, the method for radio resource management may further include: delivering to a network device corresponding to the cell a parameter set matched with the mobility feature corresponding to the cell. For example, when the cell is a high-speed cell, the first parameter set corresponding to the high-speed cell may be delivered to the base station; and when the cell is a non-high-speed cell, the second parameter set corresponding to the non-high-speed cell may be delivered to the base station. After receiving the first parameter set or the second parameter set, the base station may perform radio resource allocation adapted for the scenario.

In this exemplary implementation, the method for radio resource management may further include: periodically monitoring whether the mobility feature corresponding to the cell is changed; and triggering adjustment of the parameter set upon a change in the mobility feature corresponding to the cell. For example, when the cell is changed from a high-speed cell to a non-high-speed cell, the second parameter set corresponding to the non-high-speed cell is delivered to the base station; and when the cell is changed from a non-high-speed cell to a high-speed cell, the first parameter set corresponding to the high-speed cell is delivered to the base station.

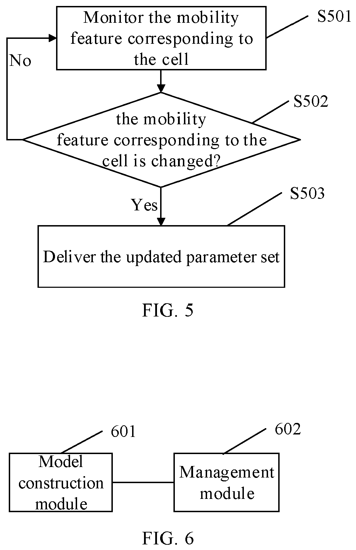

FIG. 5 is an exemplary flowchart of updating a parameter set according to the present disclosure. As shown in FIG. 5, the process for updating the parameter set according to the example includes the following operations S501 to S503.

At operation S501, monitoring in real time the mobility feature corresponding to the cell within a detection period, and checking a change in the mobility feature corresponding to the cell within the detection period.

At operation S502, judging whether the mobility feature corresponding to the cell is changed. If the mobility feature corresponding to the cell is changed, proceed to operation S503; otherwise, return to operation S501. The change in the mobility feature corresponding to the cell includes: the cell changing from a high-speed cell to a non-high-speed cell, or from a non-high-speed cell to a high-speed cell.

It should be noted that, when the number of terminal models meeting the hopping condition in a high-speed cell changes, but the cell is still a high-speed cell, the process returns to operation S501; or when the number of terminal models meeting the hopping condition in a non-high-speed cell changes, but the cell is still a non-high-speed cell, the process returns to operation S501.

At operation S503, delivering, according to the updated mobility feature, to the base station the corresponding parameter set, and automatically configuring cell parameters to the base station to make it effect.

In this example, the radio parameter configuration may be dynamically adjusted along with changes of the scenarios so that the parameter configuration is more reasonable, and the overall throughput of the cell is improved, thereby greatly improving the performance in the area as well as the user experience of the entire network.

In an exemplary implementation, when the cell is determined to be a high-speed cell based on the radio frequency fingerprint technology, the process of performing intelligent radio resource management includes the following operations S11 to S15.

At operation S11, constructing a cell feature interval model and a terminal model in a cell feature interval in a machine learning mode. The model update may be performed periodically. The cell feature intervals differ not only in signal strength but also in geographic location.

By collecting a current network index and radio resource configuration information, a parameter set corresponding to a high-speed cell and a parameter set corresponding to a non-high-speed cell can be generated based on the machine learning mode.

For any cell feature interval of the cell, it is detected whether the radio frequency fingerprint feature in the cell feature interval is still changing within a first set time length, and when the changing area become steady, a terminal model in the cell feature interval is constructed. When the terminal appears in multiple cell feature intervals within a certain time length, it indicates that the terminal is moving (called "hopping"). The more hops occur per unit time, the higher the moving speed is, and vice versa.

At operation S12, monitoring the hopping status of the terminal model in the cell feature interval. If the terminal model frequently changes in multiple cell feature intervals in a unit time and the changes reach a certain hop threshold, it indicates that the terminal user in the interval is moving at a high speed, and when a certain number of terminal models all change frequently and the changes reach the certain hop threshold, it is determined that the cell is a high-speed cell, and at this time, a parameter adjustment strategy for the high-speed cell is triggered.

At operation S13, delivering to a base station the constructed parameter set corresponding to the high-speed cell, and continuously monitoring the radio frequency fingerprint feature in the network to update the cell feature interval in real time, and iteratively updating the parameter set corresponding to the high-speed cell.

At operation S14, detecting in real time the network index after the parameter set is updated, and rolling back or confirming the modification according to a change in the network index.

At operation S15, monitoring in real time the hopping status of the terminal model in the feature interval, judging whether the high-speed cell has changed, and synchronously updating and executing a new parameter set (e.g., the parameter set corresponding to the non-high-speed cell) upon a change.

In an exemplary implementation, when the cell is determined to be a non-high-speed cell based on the radio frequency fingerprint technology, the process of performing intelligent radio resource management includes the following operations S21 to S25.

At operation S21, constructing a cell feature interval model and a terminal model in a cell feature interval in a machine learning mode. The model update may be performed periodically. The cell feature intervals differ not only in signal strength but also in geographic location.

By collecting a current network index and radio resource configuration information, a parameter set corresponding to a high-speed cell and a parameter set corresponding to a non-high-speed cell can be generated based on the machine learning mode.

For any cell feature interval of the cell, it is detected whether the radio frequency fingerprint feature in the cell feature interval is still changing within a first set time length, and when the changing area become steady, a terminal model in the cell feature interval is constructed. When the terminal appears in multiple cell feature intervals within a certain time length, it indicates that the terminal is moving (called "hopping"). The more hops occur per unit time, the higher the moving speed is, and vice versa.

At operation S22, monitoring the hopping status of the terminal model in the cell feature interval. If the terminal model has no change in multiple cell feature intervals in a unit time, or the change is less than a certain hop threshold, it indicates that the terminal user in the interval does not move or is not moving at a high speed, and when a certain number of terminal models do not have no change, or the change is less than the certain hop threshold, the cell is determined as a non-high-speed cell, and at this time, a parameter adjustment strategy for the non-high-speed cell is triggered.

At operation S23, delivering to a base station the constructed parameter set corresponding to the non-high-speed cell, and continuously monitoring the radio frequency fingerprint feature in the network to update the cell feature interval in real time, and iteratively updating the parameter set corresponding to the non-high-speed cell.

At operation S24, detecting in real time the network index after the parameter set is updated, and rolling back or confirming the modification according to a change in the network index.

At operation S25, monitoring in real time the hopping status of the terminal model in the feature interval, judging whether the non-high-speed cell has changed, and synchronously updating and executing a new parameter set (e.g., the parameter set corresponding to the high-speed cell) upon a change.

The exemplary embodiment provides the capabilities of cell delicacy management, high-speed cell identification and parameter self-configuration, reduces the difficulty of network optimization, improves the function usability, effectively ensures the utilization rate of radio resources, and greatly saves the cost of operators, and the like. Moreover, the exemplary embodiment is suitable for the wireless communication network intelligent technology, especially the combination of the artificial intelligence technology with the wireless communication field, contributes to intelligent applications in the wireless field, and plays a vital role.

Based on the method for radio resource management shown in FIG. 2, in an exemplary implementation, the method for radio resource management may further include: constructing performance models under different parameter set configurations in a machine learning mode.

In this example, after delivering to the network device corresponding to the cell the parameter set matched with the mobility feature corresponding to the cell, the method for radio resource management may further include: initiating performance index detection within a third set time length, and comparing the detected performance index with the performance index in a performance model corresponding to the delivered parameter set; triggering rollback of the parameter set when the comparison result meets a deviation condition. The third set time length may be adjusted according to actual requirements, which is not limited herein.

In this exemplary implementation, the process of performing intelligent radio resource management and performance guarantee based on the radio frequency fingerprint technology includes the following operations S31 to S35.

At operation S31, constructing a cell feature interval model and a terminal model in a cell feature interval in a machine learning mode, and generating a parameter set corresponding to a high-speed cell and a parameter set corresponding to a non-high-speed cell in the machine learning mode.

At operation S32, correlating the cell feature interval model, the cell parameter sets, and the performance index, and constructing performance models under different parameter set configurations in the machine learning mode.

At operation S33, initiating, each time a cell is successfully determined to be a high-speed or non-high-speed cell and the parameter set is delivered, performance index detection in a certain time period (i.e., the third set time length), to detect whether a performance index of the current operation deviates from a performance index in the performance model.

At operation S34, triggering rollback of the parameter set to a previous configuration when a deviation exists and exceeds a certain deviation threshold. For example, if the current cell is a high-speed cell and the previous stage is a non-high-speed cell, the parameter set is rolled back to the parameter set corresponding to the non-high-speed cell.

At operation S35, maintaining the performance model if no deviation is generated or the deviation is within a controlled range, and adopting the parameter set based on the current determination result.

It should be noted that the performance model is updated merely when the cell feature interval model or the terminal model in the interval or cell parameter set is changed, and is in a steady state in other scenarios.

Aiming at the problem that for base station cells in a wireless communication system under different scenarios, especially under the condition of different high-speed and low-speed features, the mobility parameters of radio resources cannot be dynamically changed in real time along with the change of scenarios, the present disclosure constructs a wireless radio frequency fingerprint information base to intelligently divide out a cell feature interval, and further infers the corresponding mobility feature corresponding to the current cell by creating a cell feature interval model and a terminal model in the cell feature interval, and performs parameter self-configuration matched with the mobility feature intelligently and in real time at a base station. Therefore, self-identification of scenarios can be realized, which provides reference for site planning; parameter self-configuration is realized, which saves the labor cost of operators; the radio resource allocation is more reasonable, and the overall throughput of the cell is improved; and an artificial intelligence technology is adopted so that the network is more intelligent.

FIG. 6 is a schematic diagram of an apparatus for radio resource management according to the present disclosure. As shown in FIG. 6, the apparatus for radio resource management provided in the present disclosure includes: a model construction module 601 configured to generate a cell feature interval of a cell based on a radio frequency fingerprint, and construct a terminal model in the cell feature interval; and a management module 602 configured to determine, according to hopping status of the terminal model in the cell feature interval of the cell, a mobility feature corresponding to the cell.

In an exemplary implementation, the model construction module 601 is further configured to construct, based on historical data related to a radio frequency fingerprint in a network area, a radio frequency fingerprint feature interval in a machine learning mode; and generate a cell feature interval of a cell by: superimposing real-time data in the network area as auxiliary information to the radio frequency fingerprint feature interval to generate the cell feature interval of the cell.

In an exemplary implementation, the model construction module 601 is configured to construct the terminal model in the cell feature interval by: detecting whether the radio frequency fingerprint in the cell feature interval meets a stability condition within a first set time length; and constructing, when the stability condition is met, the terminal model in the cell feature interval.

In an exemplary implementation, the management module 602 is configured to determine, according to hopping status of the terminal model in the cell feature interval of the cell, the mobility feature corresponding to the cell by: determining the number of terminal models of which the hopping status meets a hopping condition within a second set time length; determining, when the number meets a first condition, that the cell corresponds to a high mobility; and determining, when the number does not meet the first condition, that the cell corresponds to a non-high mobility.

In an exemplary implementation, the apparatus for radio resource management provided in the present disclosure may further include: a parameter set configuration module configured to generate parameter sets corresponding to different mobility features in a machine learning mode. The parameter set includes a first parameter set corresponding to a high-speed cell and a second parameter set corresponding to a non-high-speed cell. The first parameter set and the second parameter set may each include: a cell-level parameter, or a cell-level parameter and a terminal-level parameter.

In an exemplary implementation, the parameter set configuration module is further configured to: after determining the mobility feature corresponding to the cell by the management module 602, deliver to a network device corresponding to the cell a parameter set matched with the mobility feature corresponding to the cell.

In an exemplary implementation, the management module 602 is further configured to: periodically monitor whether the mobility feature corresponding to the cell is changed; and trigger adjustment of the parameter set upon a change in the mobility feature corresponding to the cell.

In an exemplary implementation, the apparatus for radio resource management provided in the present disclosure may further include: an index control module configured to construct performance models under different parameter set configurations in a machine learning mode; and after delivering to the network device corresponding to the cell the parameter set matched with the mobility feature corresponding to the cell by the parameter set configuration module, initiate performance index detection within a third set time length, and compare the detected performance index with the performance index in a performance model corresponding to the delivered parameter set; and trigger rollback of the parameter set when the comparison result meets a deviation condition.

For related description of the apparatus for radio resource management provided in the present disclosure, reference may be made to the description of the method described above, and thus, the description is not repeated here.

In addition, the present disclosure further provides a computer-readable storage medium having a computer program stored thereon which, when executed by a processor, causes the above method for radio resource management, such as the operations shown in FIG. 2 to be implemented.

Those of ordinary skill in the art will appreciate that all or some operations of the above described method, functional modules/units in the system and apparatus may be implemented as software, firmware, hardware, and suitable combinations thereof. In a hardware implementation, the division between the functional modules/units mentioned in the above description does not necessarily correspond to the division of physical components; for example, one physical component may have multiple functions, or one function or operation may be performed cooperatively by several physical components. Some or all components may be implemented as software executed by a processor, such as a digital signal processor or microprocessor, or implemented as hardware, or implemented as an integrated circuit, such as an application specific integrated circuit. Such software may be distributed on a computer-readable medium which may include a computer storage medium (or non-transitory medium) and a communication medium (or transitory medium). As is well known to those of ordinary skill in the art, the term computer storage medium includes volatile and nonvolatile, removable and non-removable medium implemented in any method or technology for storing information, such as computer readable instructions, data structures, program modules or other data. A computer storage medium includes, but is not limited to, RAM, ROM, EEPROM, flash memory or other memory technology, CD-ROM, digital versatile disc (DVD) or other optical disc storage, magnetic cartridge, magnetic tape, magnetic disk storage or other magnetic storage devices, or may be any other medium used for storing the desired information and accessible by a computer. Moreover, it is well known to those of ordinary skill in the art that a communication medium typically includes a computer-readable instruction, a data structure, a program module, or other data in a modulated data signal, such as a carrier wave or other transport mechanism, and may include any information delivery medium.

## Claims

1. A method for radio resource management, comprising:
constructing, based on historical data related to a radio frequency fingerprint in a network area, a radio frequency fingerprint feature interval in a machine learning mode;
generating (S201) a cell feature interval of a cell based on the radio frequency fingerprint, wherein the radio frequency fingerprint is configured to characterize a wireless signal strength feature of a coverage area of a network device, and the cell feature interval is configured to identify a wireless performance location area of a terminal;
constructing (S201) a terminal model in the cell feature interval, wherein one terminal model is constructed in one cell feature interval, the number of terminal hops is recorded in the terminal model and configured to characterize the total number of hops of all terminals in the cell feature interval, and a process of a terminal moving from one cell feature interval to another is referred to as a hop;
determining (S202), according to hopping status of the terminal model in the cell feature interval of the cell, a mobility feature corresponding to the cell; and
delivering to a network device corresponding to the cell a parameter set matched with the mobility feature corresponding to the cell,
wherein generating (S201) the cell feature interval of the cell based on the radio frequency fingerprint comprises:
superimposing real-time data in the network area as auxiliary information to the radio frequency fingerprint feature interval to generate the cell feature interval of the cell.

2. The method according to claim 1, wherein constructing (S201) the terminal model in the cell feature interval comprises:
detecting whether the radio frequency fingerprint in the cell feature interval meets a stability condition within a first set time length; and
constructing, in response to the stability condition is met, the terminal model in the cell feature interval.

3. The method according to claim 1, wherein determining (S202), according to the hopping status of the terminal model in the cell feature interval of the cell, the mobility feature corresponding to the cell comprises:
determining the number of terminal models of which the hopping status meets a hopping condition within a second set time length;
determining, in response to the number meeting a first condition, that the cell corresponds to a high mobility; and
determining, in response to the number not meeting the first condition, that the cell corresponds to a non-high mobility.

4. The method according to any one of claims 1 to 3, further comprising:
generating parameter sets corresponding to different mobility features in a machine learning mode.

5. The method according to claim 4, wherein generating the parameter sets corresponding to different mobility features in the machine learning mode comprises:
generating a first parameter set corresponding to a high-speed cell and a second parameter set corresponding to a non-high-speed cell in the machine learning mode,
wherein the first parameter set and the second parameter set each comprise:
a cell-level parameter; or
the cell-level parameter and a terminal-level parameter.

6. The method according to claim 1, further comprising:
periodically monitoring whether the mobility feature corresponding to the cell is changed; and
triggering adjustment of the parameter set in response to a change in the mobility feature corresponding to the cell.

7. The method according to claim 1, further comprising:
constructing performance models under different parameter set configurations in the machine learning mode, and
after delivering to the network device corresponding to the cell the parameter set matched with the mobility feature corresponding to the cell, the method further comprises:
initiating performance index detection within a third set time length, and comparing the detected performance index with the performance index in the performance model corresponding to the delivered parameter set; and
triggering rollback of the parameter set in response to the comparison result meeting a deviation condition.

8. An apparatus for radio resource management, comprising:
a model construction module (601) configured to construct, based on historical data related to a radio frequency fingerprint in a network area, a radio frequency fingerprint feature interval in a machine learning mode, generate a cell feature interval of a cell based on the radio frequency fingerprint, and construct a terminal model in the cell feature interval, wherein the radio frequency fingerprint is configured to characterize a wireless signal strength feature of a coverage area of a network device, and the cell feature interval is configured to identify a wireless performance location area of a terminal, and wherein one terminal model is constructed in one cell feature interval, the number of terminal hops is recorded in the terminal model and configured to characterize the total number of hops of all terminals in the cell feature interval, and a process of a terminal moving from one cell feature interval to another is referred to as a hop;
a management module (602) configured to determine, according to hopping status of the terminal model in the cell feature interval of the cell, a mobility feature corresponding to the cell; and
a parameter set configuration module configured to deliver to a network device corresponding to the cell a parameter set matched with the mobility feature corresponding to the cell,
wherein the model construction module (601) is configured to generate the cell feature interval of the cell by superimposing real-time data in the network area as auxiliary information to the radio frequency fingerprint feature interval to generate the cell feature interval of the cell.

9. A computer-readable storage medium having a computer program stored thereon which, when executed by a processor, causes the processor to perform the method for radio resource management according to any one of claims 1 to 7.

## Patentansprüche

1. Verfahren zur Funk-Ressourcen-Verwaltung, umfassend:
Konstruieren, auf der Basis von historischen Daten, die sich auf einen Funk-Frequenz-Fingerabdruck in einem Netzwerkbereich beziehen, eines Funk-Frequenz-Fingerabdruck-Merkmalsintervalls in einem Maschinenlernmodus;
Erzeugen (S201) eines Zellen-Merkmalsintervalls einer Zelle auf der Basis des Funk-Frequenz-Fingerabdrucks, wobei der Funk-Frequenz-Fingerabdruck zum Kennzeichnen eines Drahtlos-Signal-Stärke-Merkmals eines Abdeckungsgebiets einer Netzwerkvorrichtung konfiguriert ist, und das Zellen-Merkmalsintervall zum Identifizieren eines Drahtlos-Leistungs-Standortbereichs eines Endgeräts konfiguriert ist;
Konstruieren (S201) eines Endgerätmodells in dem Zellen-Merkmalsintervall, wobei ein Endgerätmodell in einem Zellen-Merkmalsintervall konstruiert wird, die Anzahl von Endgerät-Sprüngen in dem Endgerätmodell aufgezeichnet wird und zum Kennzeichnen der Gesamtanzahl von Sprüngen aller Endgeräte in dem Zellen-Merkmalsintervall konfiguriert ist, und ein Prozess eines Endgeräts, das sich von einem Zellen-Merkmalsintervall zu einem anderen bewegt, als ein Sprung bezeichnet wird;
Bestimmen (S202), gemäß einem Sprungstatus des Endgerätmodells in dem Zellen-Merkmalsintervall der Zelle, eines Mobilitätsmerkmals, das der Zelle entspricht; und
Liefern, an eine Netzwerkvorrichtung, die der Zelle entspricht, eines Parametersatzes, der mit dem Mobilitätsmerkmal, das der Zelle entspricht, übereinstimmt,
wobei das Erzeugen (S201) des Zellen-Merkmalsintervalls der Zelle auf der Basis des Funk-Frequenz-Fingerabdrucks umfasst:
Überlagern von Echtzeit-Daten in dem Netzwerkbereich als Hilfsinformationen auf das Funk-Frequenz-Fingerabdruck-Merkmalsintervall, um das Zellen-Merkmalsintervall der Zelle zu erzeugen.

2. Verfahren nach Anspruch 1, wobei das Konstruieren (S201) des Endgerätmodells in dem Zellen-Merkmalsintervall umfasst:
Detektieren, ob der Funk-Frequenz-Fingerabdruck in dem Zellen-Merkmalsintervall eine Stabilitätsbedingung innerhalb einer ersten eingestellten Zeitdauer erfüllt; und
Konstruieren, als Reaktion darauf, dass die Stabilitätsbedingung erfüllt ist, des Endgerätmodells in dem Zellen-Merkmalsintervall.

3. Verfahren nach Anspruch 1, wobei das Bestimmen (S202), gemäß dem Sprungstatus des Endgerätmodells in dem Zellen-Merkmalsintervall der Zelle, des Mobilitätsmerkmals, das der Zelle entspricht, umfasst:
Bestimmen der Anzahl von Endgerätmodellen, deren Sprungstatus eine Sprungbedingung innerhalb einer zweiten eingestellten Zeitdauer erfüllt;
Bestimmen, als Reaktion darauf, dass die Anzahl eine erste Bedingung erfüllt, dass die Zelle einer hohen Mobilität entspricht; und
Bestimmen, als Reaktion darauf, dass die Anzahl die erste Bedingung nicht erfüllt, dass die Zelle einer nicht hohen Mobilität entspricht.

4. Verfahren nach einem der Ansprüche 1 bis 3, ferner umfassend:
Erzeugen von Parametersätzen, die verschiedenen Mobilitätsmerkmalen entsprechen, in einem Maschinenlernmodus.

5. Verfahren nach Anspruch 4, wobei das Erzeugen der Parametersätze, die verschiedenen Mobilitätsmerkmalen entsprechen, in dem Maschinenlernmodus umfasst:
Erzeugen eines ersten Parametersatzes, der einer Hochgeschwindigkeitszelle entspricht, und eines zweiten Parametersatzes, der einer Nicht-Hochgeschwindigkeitszelle entspricht, in dem Maschinenlernmodus,
wobei der erste Parametersatz und der zweite Parametersatz jeweils umfassen:
einen Zellebenen-Parameter; oder
den Zellebenen-Parameter und einen Endgerät-Ebenen-Parameter.

6. Verfahren nach Anspruch 1, ferner umfassend:
periodisches Überwachen, ob das Mobilitätsmerkmal, das der Zelle entspricht, geändert wird; und
Auslösen einer Anpassung des Parametersatzes als Reaktion auf eine Änderung des Mobilitätsmerkmals, das der Zelle entspricht.

7. Verfahren nach Anspruch 1, ferner umfassend:
Konstruieren von Leistungsmodellen unter verschiedenen Parametersatz-Konfigurationen in dem Maschinenlernmodus, und
nach dem Liefern, an die Netzwerkvorrichtung, die der Zelle entspricht, des Parametersatzes, der mit dem Mobilitätsmerkmal, das der Zelle entspricht, übereinstimmt, das Verfahren ferner umfasst:
Initiieren einer Leistungsindex-Detektion innerhalb einer dritten eingestellten Zeitdauer und Vergleichen des detektierten Leistungsindex mit dem Leistungsindex in dem Leistungsmodell, das dem gelieferten Parametersatz entspricht; und
Auslösen eines Rollbacks des Parametersatzes als Reaktion darauf, dass das Vergleichsergebnis eine Abweichungsbedingung erfüllt.

8. Vorrichtung zur Funk-Ressourcen-Verwaltung, umfassend:
ein Modellkonstruktionsmodul (601), das zum Konstruieren, auf der Basis von historischen Daten, die sich auf einen Funk-Frequenz-Fingerabdruck in einem Netzwerkbereich beziehen, eines Funk-Frequenz-Fingerabdruck-Merkmalsintervalls in einem Maschinenlernmodus, zum Erzeugen eines Zellen-Merkmalsintervalls einer Zelle auf der Basis des Funk-Frequenz-Fingerabdrucks und zum Konstruieren eines Endgerätmodells in dem Zellen-Merkmalsintervall konfiguriert ist, wobei der Funk-Frequenz-Fingerabdruck zum Kennzeichnen eines Drahtlos-Signal-Stärke-Merkmals eines Abdeckungsgebiets einer Netzwerkvorrichtung konfiguriert ist, und das Zellen-Merkmalsintervall zum Identifizieren eines Drahtlos-Leistungs-Standortbereichs eines Endgeräts konfiguriert ist, und wobei ein Endgerätmodell in einem Zellen-Merkmalsintervall konstruiert wird, die Anzahl von Endgerät-Sprüngen in dem Endgerätmodell aufgezeichnet wird und zum Kennzeichnen der Gesamtanzahl von Sprüngen aller Endgeräte in dem Zellen-Merkmalsintervall konfiguriert ist, und ein Prozess eines Endgeräts, das sich von einem Zellen-Merkmalsintervall zu einem anderen bewegt, als ein Sprung bezeichnet wird;
ein Verwaltungsmodul (602), das zum Bestimmen, gemäß einem Sprungstatus des Endgerätmodells in dem Zellen-Merkmalsintervall der Zelle, eines Mobilitätsmerkmals, das der Zelle entspricht, konfiguriert ist; und
ein Parametersatz-Konfigurationsmodul, das zum Liefern, an eine Netzwerkvorrichtung, die der Zelle entspricht, eines Parametersatzes, der mit dem Mobilitätsmerkmal, das der Zelle entspricht, übereinstimmt, konfiguriert ist,
wobei das Modellkonstruktionsmodul (601) zum Erzeugen des Zellen-Merkmalsintervalls der Zelle durch Überlagern von Echtzeit-Daten in dem Netzwerkbereich als Hilfsinformationen auf das Funk-Frequenz-Fingerabdruck-Merkmalsintervall, um das Zellen-Merkmalsintervall der Zelle zu erzeugen, konfiguriert ist.

9. Computerlesbares Speichermedium mit einem darauf gespeicherten Computerprogramm, das bei Ausführen durch einen Prozessor den Prozessor zum Durchführen des Verfahrens zur Funk-Ressourcen-Verwaltung nach einem der Ansprüche 1 bis 7 veranlasst.

## Revendications

1. Procédé de gestion de ressources radio, comprenant :
construire, sur la base de données historiques relatives à une empreinte radiofréquence dans une zone de réseau, un intervalle de caractéristique d'empreinte radiofréquence dans un mode d'apprentissage automatique ;
générer (S201) un intervalle de caractéristique de cellule d'une cellule sur la base de l'empreinte radiofréquence, dans lequel l'empreinte radiofréquence est configurée pour caractériser une caractéristique d'intensité de signal sans fil d'une zone de couverture d'un dispositif de réseau, et l'intervalle de caractéristique de cellule est configuré pour identifier une zone de localisation de performance sans fil d'un terminal ;
construire (S201) un modèle de terminal dans l'intervalle de caractéristique de cellule, dans lequel un modèle de terminal est construit dans un intervalle de caractéristique de cellule, le nombre de sauts de terminal est enregistré dans le modèle de terminal et configuré pour caractériser le nombre total de sauts de tous les terminaux dans l'intervalle de caractéristique de cellule, et un processus de déplacement d'un terminal d'un intervalle de caractéristique de cellule à un autre est appelé un saut ;
déterminer (S202), en fonction d'un état de saut du modèle de terminal dans l'intervalle de caractéristique de cellule de la cellule, une caractéristique de mobilité correspondant à la cellule ; et
délivrer à un dispositif de réseau correspondant à la cellule un ensemble de paramètres mis en correspondance avec la caractéristique de mobilité correspondant à la cellule,
dans lequel générer (S201) l'intervalle de caractéristique de cellule de la cellule sur la base de l'empreinte radiofréquence comprend :
superposer des données en temps réel dans la zone de réseau en tant qu'informations auxiliaires à l'intervalle de caractéristique d'empreinte radiofréquence pour générer l'intervalle de caractéristique de cellule de la cellule.

2. Procédé selon la revendication 1, dans lequel construire (S201) le modèle de terminal dans l'intervalle de caractéristique de cellule comprend :
détecter si l'empreinte radiofréquence dans l'intervalle de caractéristique de cellule satisfait une condition de stabilité dans une première longueur de temps définie ; et
construire, en réponse à la condition de stabilité qui est satisfaite, le modèle de terminal dans l'intervalle de caractéristique de cellule.

3. Procédé selon la revendication 1, dans lequel déterminer (S202), en fonction de l'état de saut du modèle de terminal dans l'intervalle de caractéristique de cellule de la cellule, la caractéristique de mobilité correspondant à la cellule comprend :
déterminer le nombre de modèles de terminal dont l'état de saut satisfait une condition de saut dans une seconde longueur de temps définie ;
déterminer, en réponse au nombre satisfaisant une première condition, que la cellule correspond à une mobilité élevée ; et
déterminer, en réponse au nombre ne satisfaisant pas la première condition, que la cellule correspond à une mobilité non élevée.

4. Procédé selon l'une quelconque des revendications 1 à 3, comprenant en outre :
générer des ensembles de paramètres correspondant à différentes caractéristiques de mobilité dans un mode d'apprentissage automatique.

5. Procédé selon la revendication 4, dans lequel générer les ensembles de paramètres correspondant à différentes caractéristiques de mobilité dans le mode d'apprentissage automatique comprend :
générer un premier ensemble de paramètres correspondant à une cellule à haute vitesse et un second ensemble de paramètres correspondant à une cellule non à haute vitesse dans le mode d'apprentissage automatique,
dans lequel le premier ensemble de paramètres et le second ensemble de paramètres comprennent chacun :
un paramètre de niveau de cellule ; ou
le paramètre de niveau de cellule et un paramètre de niveau de terminal.

6. Procédé selon la revendication 1, comprenant en outre :
surveiller périodiquement si la caractéristique de mobilité correspondant à la cellule est changée ; et
déclencher un ajustement de l'ensemble de paramètres en réponse à un changement de la caractéristique de mobilité correspondant à la cellule.

7. Procédé selon la revendication 1, comprenant en outre :
construire des modèles de performance sous différentes configurations d'ensemble de paramètres dans le mode d'apprentissage automatique, et
après avoir délivré au dispositif de réseau correspondant à la cellule l'ensemble de paramètres mis en correspondance avec la caractéristique de mobilité correspondant à la cellule, le procédé comprend en outre :
initier une détection d'indice de performance dans une troisième longueur de temps définie, et comparer l'indice de performance détecté avec l'indice de performance dans le modèle de performance correspondant à l'ensemble de paramètres délivré ; et
déclencher un retour en arrière de l'ensemble de paramètres en réponse au résultat de comparaison satisfaisant une condition de déviation.

8. Appareil de gestion de ressources radio, comprenant :
un module de construction de modèle (601) configuré pour construire, sur la base de données historiques relatives à une empreinte radiofréquence dans une zone de réseau, un intervalle de caractéristique d'empreinte radiofréquence dans un mode d'apprentissage automatique, générer un intervalle de caractéristique de cellule d'une cellule sur la base de l'empreinte radiofréquence, et construire un modèle de terminal dans l'intervalle de caractéristique de cellule, dans lequel l'empreinte radiofréquence est configurée pour caractériser une caractéristique d'intensité de signal sans fil d'une zone de couverture d'un dispositif de réseau, et l'intervalle de caractéristique de cellule est configuré pour identifier une zone de localisation de performance sans fil d'un terminal, et dans lequel un modèle de terminal est construit dans un intervalle de caractéristique de cellule, le nombre de sauts de terminal est enregistré dans le modèle de terminal et configuré pour caractériser le nombre total de sauts de tous les terminaux dans l'intervalle de caractéristique de cellule, et un processus de déplacement d'un terminal d'un intervalle de caractéristique de cellule à un autre est appelé un saut ;
un module de gestion (602) configuré pour déterminer, en fonction d'un état de saut du modèle de terminal dans l'intervalle de caractéristique de cellule de la cellule, une caractéristique de mobilité correspondant à la cellule ; et
un module de configuration d'ensemble de paramètres configuré pour délivrer à un dispositif de réseau correspondant à la cellule un ensemble de paramètres mis en correspondance avec la caractéristique de mobilité correspondant à la cellule,
dans lequel le module de construction de modèle (601) est configuré pour générer l'intervalle de caractéristique de cellule de la cellule en superposant des données en temps réel dans la zone de réseau en tant qu'informations auxiliaires à l'intervalle de caractéristique d'empreinte radiofréquence pour générer l'intervalle de caractéristique de cellule de la cellule.

9. Moyen de stockage lisible par ordinateur sur lequel est stocké un programme informatique qui, lorsqu'il est exécuté par un processeur, amène le processeur à réaliser le procédé de gestion de ressources radio selon l'une quelconque des revendications 1 à 7.
